# EUROPÄISCHE PATENTSCHRIFT

(11) **EP 0 632 962 B1**
(45) Veröffentlichungstag und Bekanntmachung des Hinweises auf die Patenterteilung: **06.08.1997**
(21) Anmeldenummer: 94110059.6
(22) Anmeldetag: 29.06.1994
(51) Int. Cl.: A23G 3/20, A23G 3/22

(54) **Vorrichtung zum Entfernen von Überzugsmasse im hinteren Bodenbereich von Warenstücken**
Apparatus to remove the coating deposited on the back bottom of articles
Appareil pour détacher la couverture dépositée en bas de la partie arrière des articles

(30) Priorität: 06.07.1993 DE 4322414
(43) Veröffentlichungstag der Anmeldung: 11.01.1995
(73) Patentinhaber: SOLLICH GmbH & Co. KG, D-32105 Bad Salzuflen (DE)
(72) Erfinder: Sollich, Helmut, D-24407 Rabenkirchen (DE)
(74) Vertreter: Rehberg, Elmar, Dipl.-Ing.

(56) Entgegenhaltungen:
- WO-A-89/03259
- DE-B- 2 503 292
- DE-C- 527 751
- DE-C- 4 212 427

## Beschreibung

Die Erfindung bezieht sich auf eine Vorrichtung zum Entfernen von schmelzflüssiger Überzugsmasse, insbesondere Schokolademasse, im hinteren Bodenbereich von Warenstücken, mit einer im Spaltbereich zwischen zwei aneinander anschließenden Förderbändern über die Arbeitsbreite reichenden, angetriebenen Welle. Beim Überziehen von Warenstücken, wie beispielsweise Müsliriegel, Gebäckstücke, Pralinen u. dgl., wird die schmelzflüssige Überzugsmasse in einer Überziehmaschine, sei es allein von oben, sei es unter Mitverwendung eines Bodenwalls o. dgl. auf die Warenstücke aufgebracht. Das im Bereich der Überziehmaschine angeordnete Förderband ist als Gitterband ausgebildet, damit der Großteil der im Überschuß verwendeten Überzugsmasse von dem Warenstück ablaufen und durch das Gitterband hindurchtreten kann, damit es im Kreislauf der Überziehmaschine weiter gefördert wird. An das auslaufseitige Ende des Förderbandes der Überziehmaschine schließt sich ein weiteres Förderband an, welches vorzugsweise das Transportband eines Kühlkanals sein kann, der letztlich dazu dient, die Überzugsmasse auf dem Warenstück gänzlich in den festen Zustand zu überführen und zu kühlen.

Im Bereich des Übertrittes der Warenstücke von dem ersten Förderband auf das nachgeschaltete zweite Förderband befindet sich ein Teil der Überzugsmasse noch in schmelzflüssigem bzw. bildsamem Zustand. Da zwischen zwei aneinander anschließenden Förderbändern immer ein Spaltbereich vorgesehen sein muß, bilden sich insbesondere in diesem Spaltbereich im hinteren Bodenbereich der Warenstücke, also entgegengerichtet zur Förderrichtung der Warenstücke, aus der Überzugsmasse Grate oder Schwänze, die eine ausgefranste Kante des Warenstückes bilden, so daß die Bodenkante des überzogenen Warenstückes umlaufend nicht die gleiche Gestalt besitzt. Die hintere ausgefranste Kante mit den Graten und Schwänzen bietet nicht nur ein unschönes Aussehen, sondern stört auch die Weiterverarbeitung der Warenstücke. Zunächst besteht die Gefahr, daß ein Teil dieser Grate auf dem oder den nachfolgenden Förderbändern abbricht, wodurch im Dauerbetrieb eine Verschmutzung dieser Förderbänder stattfindet. Aber auch in nachgeschalteten Verpackungsmaschinen können sich diese Grate als hinderlich erweisen.

Eine Vorrichtung der eingangs beschriebenen Art ist aus der DE-A-440 677 bekannt. Im Spaltbereich zwischen zwei aneinander anschließenden Förderbändern ist eine mit etwa 1000 Umdrehungen/min. vergleichsweise schnell angetriebene Welle vorgesehen, die über die Arbeitsbreite reicht und die Aufgabe hat, Grate oder Schwänze aus der Überzugsmasse von Warenstücken zu entfernen und in den Kreislauf der Überziehmaschine zurückzuführen. Die Welle ist in beiden Endbereichen mechanisch aufgelagert, besitzt also mechanische Lager, während sie im Mittelbereich nicht abgestützt ist.

Um dem aufgezeigten Problem zu begegnen und einen Teil der schmelzflüssigen Überzugsmasse, aus dem sich die Grate oder Schwänze nach der Erstarrung dieser Überzugsmasse bilden würden, im Spaltbereich zwischen zwei aneinander anschließenden Förderbändern zu entfernen, ist weiterhin eine Vorrichtung mit einer Welle bekannt, die je nach Ausbildung der Vorrichtung einen Durchmesser zwischen etwa 3 bis etwa 6 mm aufweisen kann, ist im Spaltbereich meist mit geringfügigem Abstand unterhalb der durch die Oberfläche der beiden aneinander anschließenden Förderbändern gebildeten Förderbahn angeordnet. Die Welle wird mit einer relativ hohen Drehzahl in der Größenordnung von etwa 200 bis 1.400 min⁻¹ angetrieben. Die die Grate oder Schwänze bildende Überzugsmasse gelangt aufgrund der Schwerkrafteinwirkung im Spaltbereich etwas tiefer als die Förderebene, so daß dieser Teil der Überzugsmasse mit der Oberfläche der Welle in Kontakt kommt und mitgenommen wird. Es findet praktisch ein Abreißvorgang in schmelzflüssigem bzw. bildsamem Zustand statt, wobei der abgerissene Teil der Überzugsmasse von der Welle aufgewickelt bzw. mitgenommen wird. Die Welle selbst ist auf einem ortsfest angeordneten und etwa vertikal ausgerichtet vorgesehenen beheizten Abstreifblech abgestützt, wobei das Abstreifblech gegenüber der Welle so angestellt ist, daß eine Übergabe der abgenommenen Überzugsmasse von der Welle auf das Abstreifblech stattfindet. Durch die Beheizung des Abstreifbleches und die dadurch hervorgerufene Wärmeentwicklung, die sich auch auf die Welle auswirkt, verbleibt die übernommene Abzugsmasse in flüssigem Zustand, kann somit in Schwerkraftrichtung ablaufen und in den Kreislauf der Überzugsmaschine zurückgeführt werden. Durch das Abstreifblech wird die Oberfläche der Welle kontinuierlich von Überzugsmasse gereinigt.

Bei relativ großen bzw. langen Warenstücken, wie etwa Riegel oder Kekse, ist die bekannte Vorrichtung mit guter Wirkung anwendbar. Da wegen der Länge der Warenstücke in Förderrichtung die Breite des Spaltes zwischen zwei aneinander anschließenden Förderbändern nicht allzu klein gewählt werden muß, ergibt sich die Möglichkeit, auch den Durchmesser der Welle relativ groß wählen zu können, wodurch die Welle auch bei relativ schnellem Antrieb um ihre Achse eine ausreichende Stabilität erhält. Dies ist insbesondere bei kleinen Arbeitsbreiten, also etwa unterhalb 600 mm, ohne weiteres der Fall. Bei größeren Arbeitsbreiten und insbesondere bei in Förderrichtung vergleichsweise kurzen Warenstücken, wie etwa Weinbrandbohnen oder -kirschen, muß die Spaltbreite zwischen zwei aneinander anschließenden Förderbändern ohnehin sehr klein gewählt werden, damit die kurzen Warenstücke den Spaltbereich ordnungsgemäß passieren können. Wird dann noch zusätzlich die Arbeitsbreite der Vorrichtung groß gewählt, also etwa in der Größenordnung zwischen 1.000 und 2.000 mm, dann treten Probleme auf. An der dann notwendigerweise einen kleinen Durchmesser aufweisenden Welle, die relativ lang ausgebildet sein muß, treten Schwingungen auf. Die Welle neigt zum Flattern und zum Abheben von dem Abstreifblech, und die Funktion ist nicht mehr gegeben. Die Welle kann, auch bereichsweise, ihre Lage auf dem Abstreifblech verlassen und in Richtung auf die vertikale Längsseite des Abstreifbleches verlaufen. Diese Gefahr besteht insbesondere im Mittelbereich einer langen Welle. Die beabsichtigte Wirkung des Entfernens der Grate im hinteren Bodenbereich tritt dann nicht mehr ein.

Um dem Flattern, Abheben und Verlaufen der Welle relativ zum Abstreifblech zu begegnen, ist es bekannt, in Abständen über die Arbeitsbreite Lageraugen, Klammern o. dgl. vorzusehen, die die Welle zumindest teilweise umgreifen und zusätzliche örtliche Lager für die Welle im Arbeitsbereich darstellen. Außer diesen zusätzlichen Lagern ist die Welle vorzugsweise in zwei Endlagern im Bereich jedes ihrer Enden noch gelagert, wobei sich diese Endlager außerhalb der Arbeitsbreite der Förderbänder befinden. Die Lageraugen, Klammern o. dgl. führen in nachteiliger Weise dazu, daß entweder der Abstand der beiden Förderbänder im Spaltbereich vergrößert oder der Durchmesser der Welle entsprechend verkleinert werden muß. Wenn die Lageraugen, Klammern o. dgl. die Welle auch auf ihrer Oberseite, also der Förderbahn zugekehrt, übergreifen, ist es nicht mehr möglich, die Welle relativ nahe an die Unterseite der Förderbahn heranzurücken, sondern es ergibt sich ein konstruktiv notwendiger Abstand in vertikaler Richtung, was zur Folge hat, daß vergleichsweise kurze Grate oder Schwänze schmelzflüssiger Überzugsmasse von der Welle nicht mehr ergriffen werden. Der Hauptnachteil solcher Lageraugen, Klammern o. dgl. besteht jedoch darin, daß sich an ihnen Überzugsmasse aufbauen kann, die den Boden von solchen Warenstücken verschmiert und beeinträchtigt, die die Förderbänder im Bereich der Anordnungsstelle der Lageraugen passieren. Wenn die Überziehmaschine nur für ein einziges Produkt ausgelegt und bestimmt ist, bei dem die Warenstücke in örtlich festgelegten Reihen ausgetragen werden, besteht die Möglichkeit, die Lageraugen zwischen den Reihen der Warenstücke anzuordnen. Bei der Verarbeitung von wechselnden Produkten in der Überziehmaschine entfällt diese Möglichkeit. Auch muß immer wieder damit gerechnet werden, daß selbst vorgegebene Reihen von Warenstücken seitlich verlaufen, so daß die Warenstücke dann dennoch mit den Lageraugen in Kontakt kommen können. In dem Bereich, in welchem die Lageraugen an der Welle wirksam sind, verliert die Welle ihre Abnahmefunktion, oder diese ist doch stark beeinträchtigt. Weiterhin ist nachteilig, daß die Lageraugen, Klammern o. dgl., die auf dem Abstreifblech ortsfest gelagert und angeordnet sein können, wegen der beschriebenen Verhältnisse sehr dünnwandig ausgebildet sein müssen. Sie stellen daher Teile dar, die einem schnellen Verschleiß unterliegen und des öfteren ersetzt werden müssen. Insbesondere dann, wenn diese Lageraugen ösenartig geschlossen sind, ist das einfache Auswechseln der Welle und/oder der Lageraugen nur durch eine umfangreiche Demontage- und Montagearbeit zu erreichen, während der die Überziehmaschine nicht zur Produktion genutzt werden kann. Insbesondere schnell umlaufend angetriebene Wellen erhalten beim normalen Betrieb, insbesondere aber dann, wenn Fremdkörper in den Bereich zwischen Welle und Abstreifblech gelangen, einen Schlag, der die Welle so verformt, daß sie unbrauchbar wird und ausgetauscht werden muß. Nur in ganz seltenen Fällen kann eine Welle mit Schlag durch einen Richtvorgang außerhalb der Überziehmaschine in einen wiederverwendbaren Zustand überführt werden. In der Regel müssen die Wellen gegen neue Wellen ausgetauscht werden. Auch dieser Austausch stellt eine erhebliche Zeit inanspruchnehmende Reparatur dar, bei der zumindest die beiden außerhalb der Arbeitsbreite befindlichen Endlager ausgebaut werden müssen, um die Welle überhaupt zugänglich zu machen.

Aus der DE-PS 527 751 ist eine andersartige Vorrichtung bekannt, die jedoch ebenfalls dazu dient, schmelzflüssige Überzugsmasse im hinteren Bodenbereich von Warenstücken abzunehmen und insoweit das Entstehen von Graten und Schwänzen zu verhindern. Es wird hier ein endloses Seil, insbesondere ein Kabel, eingesetzt, welches mit seinem oberen Trum im Spaltbereich zwischen zwei aneinander anschließenden Förderbändern angeordnet ist und vergleichsweise schnell quer zur Förderrichtung der Warenstücke durch den Spaltbereich hindurchbewegt wird, so daß auch hierbei von dem Seil, Draht o. dgl. Überzugsmasse im hinteren Bodenbereich entfernt werden kann. Das Kabel arbeitet mit einem Abstreifblech zusammen, so daß auch hier eine kontinuierliche Reinigung stattfindet. Die Vorrichtung besitzt eine Spanneinrichtung, insbesondere eine Spannrolle, mit der die notwendige Spannung auf das Kabel aufgebracht wird. Das Kabel kann zwar vorteilhaft einen kleinen Durchmesser aufweisen, der noch kleiner ist als der kleinste Durchmesser von bekanntermaßen eingesetzten Wellen, jedoch wird damit auch die mit der Überzugsmasse in Kontakt kommende Oberfläche des Kabels in nachteiliger Weise verkleinert, und der Abreißvorgang der Überzugsmasse gestaltet sich nicht in Förderrichtung oder bei entgegengesetztem Antrieb der Welle entgegen der Förderrichtung, sondern infolge einer 90°-Umlenkung nach der Seite. Ferner ist das Abstreifblech nicht über die Arbeitsbreite reichend vorgesehen, sondern außerhalb der Arbeitsbreite, so daß sich die vom Kabel mitgenommene Überzugsmasse von mehreren Warenstücken über die Arbeitsbreite auf dem Kabel aufbauen kann.

Der Erfindung liegt die Aufgabe zugrunde, eine Vorrichtung der eingangs beschriebenen Art so weiterzubilden, daß die beschriebenen Probleme weitgehend beseitigt sind und die Vorrichtung auf bei kurzen Warenstücken, also entsprechend kleiner Spaltweite und auch bei großen Arbeitsbreiten, insbesondere im Bereich zwischen 1.000 und 2.000 mm, mit zuverlässiger Arbeitsweise eingesetzt werden kann.

Erfindungsgemäß wird dies bei einer Vorrichtung der eingangs beschriebenen Art dadurch erreicht, daß unter der Welle ein ortsfest und etwa vertikal angeordnetes, beheiztes Abstreifblech vorgesehen ist, auf dem die Welle abgestützt ist und welches die Welle von der übernommenen Überzugsmasse reinigt, und daß die Welle auf dem Abstreifblech durch magnetische Kräfte gehalten und gelagert ist.

Damit wird nicht nur eine Abstützfunktion der Welle auf dem Abstreifblech erreicht, wie dies im Stand der Technik der Fall ist, sondern es wird ein mehr oder weniger kontinuierliches, über die Arbeitsbreite reichendes Lager für die Welle auf dem Abstreifblech geschaffen. Durch die magnetische Anziehung zwischen Welle und Abstreifblech ist ferner sichergestellt, daß die Welle gegenüber dem Abstreifblech angestellt ist und das Abstreifblech bei dem Umlauf der Welle um ihre Achse seine Abstreif- und Reinigungfunktion für die Welle optimal erfüllen kann. Die magnetischen Kräfte können über die Arbeitsbreite durchgehend konstant vorgesehen sein. Es ist aber auch möglich, die Magnetkraft gleichsam örtlich zu dosieren und dort vergleichsweise verstärkt einzusetzen, wo infolge sonst auftretender Schwingungen ein Abheben der Welle von dem Abstreifblech zu erwarten wäre. Es wird eine zuverlässige Arbeitsweise der Vorrichtung über die gesamte Arbeitsbreite erreicht, weitgehend unabhängig von der absoluten Größe der Arbeitsbreite, also auch bei sehr breiten Vorrichtungen und bei solchen Vorrichtungen, die für sehr in Förderrichtung kurze Warenstücke bestimmt ist. Es kann vorteilhaft ein relativ kleiner Wellendurchmesser realisiert werden, wobei das Schlagen solcher Wellen auch bei großer Arbeitsbreite vermieden wird. Jegliche Lageraugen, Klammern o. dgl., also die Ausbildung örtlicher Zwischenlager wird vermieden. Weiterhin ist vorteilhaft, daß die Welle durch die Magnetkraft begrenzt ausweichbar gegenüber dem Abstreifblech gelagert ist, so daß zwischen Welle und Abstreifblech einlaufende Fremdkörper, wie insbesondere Streugut an den zu überziehenden Warenstücken, Drahtstücke des als Gitterband ausgebildeten ersten Förderbandes o. dgl. nicht zu einer Zerstörung der Welle führen, sondern durch die Umdrehung der Welle und das begrenzten Ausweichen gleichsam aus dem Spaltbereich zwischen Welle und Abstreifblech hinweggefördert werden. Durch die Lagerung der Welle mit Hilfe magnetischer Kräfte ist die Beschädigungsgefahr der Welle gegenüber dem Stand der Technik erheblich reduziert. Andererseits läßt sich eine solche magnetisch gehaltene und gelagerte Welle sehr leicht auswechseln. Umfangreiche Demontage- und Montagemöglichkeiten entfallen. Auch auf der dem Motor zugekehrten Seite kann ein Endlager für die Welle in Fortfall kommen. Es ist lediglich erforderlich, den Drehantrieb des Motors auf die Welle zu übertragen und ein Auswandern der Welle in Richtung ihrer Achse, also quer zur Arbeitsbreite, zu verhindern. Die neue Vorrichtung bietet zudem vorteilhaft die Möglichkeit, vorhandene Überziehmaschinen mit geringem Aufwand umzurüsten, also mit der neuen Vorrichtung zu versehen.

Im Bereich des Abstreifbleches können Magnete vorgesehen und über die Arbeitsbreite verteilt angeordnet sein. Diese Magnete sind entweder auf der Außenseite eines einstückigen Abstreifbleches oder auch im Zwischenraum zwischen einem zweiteiligen Abstreifblech vorgesehen und zweckmäßig über die Arbeitsbreite verteilt angeordnet. Die Anordnung wird dabei so getroffen, daß dabei örtlich die Magnetkraft verstärkt bzw. zur Einwirkung gebracht wird, während sie in Nachbarbereichen der Magnete vergleichsweise schwächer ausgebildet sein kann. Dies zielt darauf ab, besonders gefährdete Bereiche, an denen erfahrungsgemäß Schwingungen und Flatterbewegungen der Welle auftreten, stärker zu beeinflussen als ungefährdete Nachbarbereiche. Gleichzeitig wird damit Gesamtmagnetkraft über die Arbeitsbreite dosiert, so daß die Gesamtreibungskraft, die beim Umlauf der Welle gegenüber dem ortsfesten und stillstehend angeordneten Abstreifblech auftritt, in vertretbaren Grenzen kleingehalten wird. Eine geringe Antriebsleistung des Motors reicht zum Betrieb der schnellaufenden Welle aus.

Es ist aber auch möglich, daß das Abstreifblech selbst ganz oder teilweise magnetisch ausgebildet ist, wobei insbesondere ein durchgehend gleiches Magnetfeld über die Arbeitsbreite erzielt wird. In allen Fällen besteht die Welle aus ferromagnetischem Material. Das Magnetfeld bzw. die örtlichen Magnetfelder werden so ausgerichtet, daß im Bereich der Welle möglichst eine Bündelung bzw. Konzentration der Feldlinien des Magnetfeldes stattfindet, damit die Welle an dieser Stelle begrenzt ausweichbar gelagert bzw. gehalten ist.

Das Abstreifblech oder der der Welle zugekehrte Teil kann etwa rechteckigen Querschnitt aufweisen, auf dessen oberer, sich etwa horizontal erstreckender Breitfläche die Welle mittig gehalten ist. Auch dabei besitzt das von dem oder den Magneten aufgebrachte Feld den erforderlichen Verlauf, um die Welle mittig auf der Breitfläche zu lagern. Die Breitfläche des Abstreifbleches kann bettartig ausgebildet sein, so daß nicht nur eine Berührlinie, sondern eine Berührfläche mit dem Umfang der Welle gebildet wird. Dies kann von vornherein der Fall sein, also im neuen Herstellungszustand des Abstreifbleches. Es ist aber auch möglich, das Abstreifblech mit rechteckigem Querschnitt zu verwirklichen und der Welle ein Einarbeiten in die Breitfläche des Abstreifbleches zu gestatten, so daß die bettartige Ausbildung sich am Abstreifblech erst im Verlaufe der Betriebszeit bildet. Es entstehen dann sogar vorteilhaft - je nach Drehrichtung der Welle - zwei mehr oder weniger scharfe Abstreifkanten im Bereich des Abstreifbleches. Durch die bettartige Ausformung des Abstreifbleches wird zusätzlich die mechanische Abstützung der Welle auf dem Abstreifblech begünstigt bzw. verbessert.

Das Abstreifblech kann zwei Spannbleche aufweisen, zwischen denen ein mit magnetischen Partikeln gefüllter Stützstreifen aus Kunststoff angeordnet und gehalten ist, auf dessen oberer Breitfläche die Welle abgestützt ist. Die Spannbleche erbringen die mechanische Stabilität, während der mit magnetischen Partikeln gefüllte Stützstreifen aus Kunststoff auch hier das bettartige Einarbeiten der Welle relativ zum Abstreifblech gestattet. Es versteht sich, daß entweder das gesamte Abstreifblech oder aber zumindest der Stützstreifen aus Kunststoff höhenveränderlich und damit einstellbar ausgebildet ist, damit der Abstand des oberen Umfangsbereiches der Welle zu der durch die Oberfläche der beiden Förderbänder gebildeten Förderebene eingestellt bwz. nachgestellt werden kann. Üblicherweise ist die Welle tangential mit etwas Abstand zu dieser Förderebene gelagert, damit der gesamte Bodenbereich des Warenstückes im Spaltbereich von der Oberfläche der Welle nicht tangiert wird.

Das Abstreifblech kann zwei etwa symmetrisch zu einer vertikalen Längsmittelebene über die Arbeitsbreite ausgebildete Winkelbleche aufweisen, die mit geringem gegenseitigen Abstand angeordnet sind, so daß im Zwischenraum zwischen den

Winkelblechen die Magnete vorgesehen sind. Die Magnete können aber auch außen an den Winkelblechen angeordnet sein. Durch die symmetrisch zu der vertikalen Längsmittelebene angeordneten Winkelbleche wird die Welle auf dem Abstreifblech zentriert zu der Längsmittelebene mechanisch stabil aufgelagert, wobei die Magnetkraft unterstützend hinzutritt. Vorteilhaft werden - unabhängig von der Drehrichtung der Welle - am Abstreifblech zwei Abstreifkanten für Überzugsmasse gebildet. Die erforderliche Spaltweite zwischen den beiden aneinander anschließenden Förderbändern wird damit nicht vergrößert.

Die Magnete sind mit gegenseitigem Abstand angeordnet und weisen zweckmäßig eine den Abfluß von Überzugsmasse gestattende Form auf. So können die Magnete bespielsweise mit dreieckiger Form zwischen den Winkelblechen auf Abstand plaziert sein, um den Durchtritt von Überzugsmasse in Schwerkraftrichtung zu ermöglichen.

Die Magnete können als Permanentmagnete ausgebildet sein und unabhängig, d. h. zusätzlich zu der Heizeinrichtung für das Abstreifblech und die Welle vorgesehen sein. Es ist aber auch möglich, die Magnete als Elektromagnete auszubilden, die in ihrer Magnetkraft vorzugsweise steuerbar bzw. einstellbar ausgebildet sind. Auch besteht hierbei die Möglichkeit, die Elektromagnete gleichzeitig als Wärmeerzeuger auszubilden, also mit ihnen gleichzeitig auch die Heizvorrichtung zu verwirklichen.

Ausführungsformen der erfindungsgemäßen Vorrichtung sind in den Zeichnungen dargestellt und werden im Folgenden näher beschrieben. Es zeigen:
- Figur 1: einen Vertikalschnitt durch zwei aneinander anschließende Förderbänder in Förderrichtung, also quer zur Arbeitsbreite,
- Figur 2: einen Schnitt gemäß der Linie II-II in Figur 1 mit schematischer Draufsicht auf die wesentlichen Teile der Vorrichtung in Förderrichtung,
- Figur 3: eine ähnliche Darstellung wie Figur 1, jedoch beschränkt auf eine weitere Ausführungsform des Abstreifbleches,
- Figur 4: eine ähnliche Darstellung wie Figur 3 zur weiteren Verdeutlichung einer Ausführungsform,
- Figur 5: ein zweiteiliges Abstützblech unter Verwendung von Elektromagneten im Zwischenraum und
- Figur 6: eine ähnliche Darstellung an einer weiteren Ausführungsform.

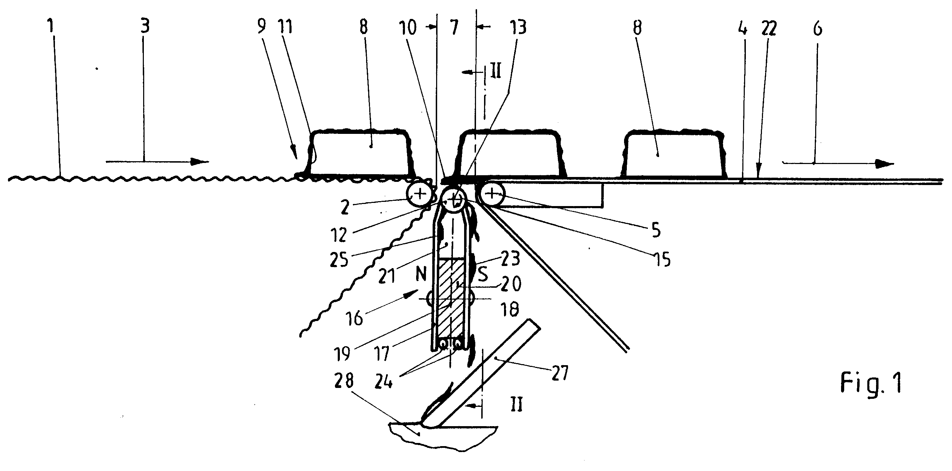

In Figur 1 ist die grundsätzliche Einbausituation der Vorrichtung verdeutlicht. Ein erstes Förderband 1, welches in der Regel das Gitterband der Überziehmaschine ist, wird auslaufseitig über eine Walze 2 gemäß Pfeil 3 kontinuierlich umlaufend angetrieben. An das Förderband 1 schließt ein zweites Förderband 4 an, welches in der Regel das Förderband eines der Überziehmaschine nachgeschalteten Kühlkanals ist. Das Förderband 4 wird einlaufseitig um eine Walze 5 oder auch eine Kante herumgeführt und kontinuierlich mit gleicher Geschwindigkeit wie das Förderband 1 in Richtung des Pfeils 6 angetrieben.

Zwischen den Walzen 2 und 5 bzw. den Oberflächen der Förderbänder 1 und 4 ergibt sich ein Spaltbereich 7, den die auf dem Förderband 1 gemäß Pfeil 3 herangeführte Warenstücke 8 überwinden müssen, ohne daß die Warenstücke 8 durch den Spaltbereich 7 nach unten herabfallen können. Darüberhinaus dürfen die Warenstücke 8 z. B. ihre Reihenanordnung auf den Förderbändern 1 und 4 nebeneinander nicht verändern und nicht verlassen. Es ist demzufolge erforderlich, insbesondere bei in Förderrichtung gemäß den Pfeilen 3 und 6 relativ kurzen Warenstücken 8, den Spaltbereich 7 möglichst klein auszubilden.

Überziehmasse, mit denen die Warenstücke 8 in der Überziehmaschine, also im Bereich des Förderbands 1 in Kontakt kommen, wird im Überschuß verwendet und läuft bzw. tropft durch die Maschen des als Gitterband ausgebildeten Förderbandes 1 hindurch. Es wird in einer nicht dargestellten Wanne aufgefangen und verbleibt somit im Kreislauf der Überziehmaschine. Im Spaltbereich 7 haben Teile dieser Überzugsmasse die Neigung, im hinteren Bodenbereich 9 der Warenstücke 8 Grate 10, Schwänze u. dgl. zu bilden, zu denen die schmelzflüssige Überzugsmasse 11 im hinteren Bodenbereich 9 bei der weiteren Förderung der Warenstücke 8 erstarrt, so daß die hintere Kante der Warenstücke 8 im Bodenbereich ein unschönes ausgefranstes Aussehen bekommt.

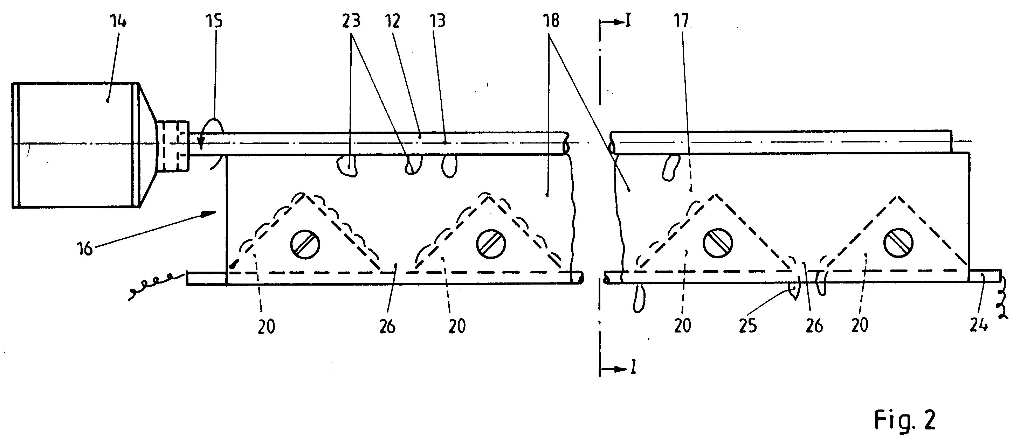

Um diese Grate 10 zu vermeiden bzw. die betreffende noch schmelzflüssige Überzugsmasse 11 zu entfernen, wird die neue Vorrichtung im Spaltbereich 7 so angeordnet, wie dies Figur 1 zeigt. Die Vorrichtung weist als wesentliche Bestandteile eine Welle 12 aus ferromagnetischem Material, insbesondere Stahl, auf, die sich mit ihrer Achse 13 quer zur Arbeitsrichtung gemäß den Pfeilen 3 und 6 über die gesamte Arbeitsbreite der Förderbänder 1 und 4 im Spaltbereich 7 erstreckt. Die Welle 12 wird über einen Motor 14 (Figur 2) gemäß Pfeil 15 oder auch entgegengesetzt zum Pfeil 15 schnellaufend rotierend um ihre Achse 13 angetrieben.

Zweiter wesentlicher Bestandteil der Vorrichtung ist ein Abstreifblech 16, welches ein- oder mehrteilig ausgebildet sein kann und sich im wesentlichen vertikal erstreckend und ebenfalls über die Arbeitsbreite reichend angordnet ist. Die Auflagerung und Abstützung des Abstreifbleches 16 ist aus Übersichtlichkeitsgründen nicht dargestellt. Das Abstreifblech 16 dient zum Abstützen und Lagern der Welle 12 in seinem oberen Bereich. Das Abstreifblech 16 unterfängt also die Welle 12 von unten her.

Gemäß der Ausführungsform der Figur 1 und 2 weist das Abstreifblech 16 zwei Winkelbleche 17 und 18 auf, die symmetrisch zu einer vertikalen Längsmittelebene 19 quer zur Arbeitsbreite, also durch die Achse 13, ausgebildet und angeordnet sind. Die beiden Winkelbleche 17 und 18 sind im oberen Bereich jeweils auf die Längsmittelebene 19 zu abgewinkelt, so daß auf diese Art und Weise zwischen den beiden Oberkanten der Winkelbleche 17 und 18 ein stabiles mechanisches Lager für die Abstützung und Auflagerung der Welle 12 gebildet ist. Zusätzlich sind Permanentmagnete 20 im Zwischenraum 21 zwischen den beiden Winkelblechen 17 und 18 über die Arbeitsbreite abständig verteilt (Figur 2) angeordnet, deren Magnetfeldlage durch den angedeuteten Nordpol und Südpol verdeutlicht ist. Die Winkelbleche 17 und 18 bündeln bzw. konzentrieren die Feldlinien im Bereich der Welle 12, so daß die Welle 12 zusätzlich zu ihrer mechanischen Auflagerung noch über Magnetkräfte an dem Abstreifblech 16 gehalten bzw. gelagert ist. Selbst bei schnellaufend angetriebener Welle 12 besteht deshalb nicht die Gefahr, daß die Welle 12 infolge von auftretenden Stößen, Schwingungen o. dgl. nach oben abhebt, schlägt oder sonstwie beeinträchtigt wird. Die Welle 12 erhält vielmehr auch bei großen Arbeitsbreiten eine stabile Auflagerung auf dem Abstreifblech 16, so daß der Durchmesser der Welle 12 vorteilhaft sehr klein gehalten werden kann und damit auch der Spaltbereich 7 konstruktiv klein gewählt werden kann, so daß auch in Förderrichtung kurze Warenstücke 8 den Spaltbereich 7 ordnungsgemäß passieren können. Die Oberfläche der Förderbänder 1 und 4 bildet eine Förderebene 22, wobei die Welle 12 mit ihrer Achse 13 in der Regel mit etwas Abstand nach unten versetzt angeordnet ist, derart, daß eine Horizontaltangente an den oberen Bereich der Welle 12 noch einen Abstand zu der Förderebene 22 aufweist. Dies ist aus Figur 1 erkennbar. Freilich wird die relative Höhenlage der Welle 12 so eingestellt, wozu eine hier nicht dargestellte Höhenverstelleinrichtung vorgesehen ist, daß schmelzflüssige Überzugsmasse 11, die sonst zur Bildung der Grate 10 führen würde, von der Oberfläche der Welle 12 erfaßt und in Richtung des Pfeils 15 mitgenommen wird. Diese Masse gelangt dann in Kontakt mit einer ersten oberen Abstreifkante an dem Winkelblech 18 und fließt etwa in Form von Tropfen 23 an der Außenseite des Winkelbleches 18 in Schwerkraftrichtung nach unten ab. Eine Heizeinrichtung 24, beispielsweise aus einem oder auch aus zwei in ihrer Leistung regelbaren Heizstäben, ist mit dem Abstreifblech 16, also insbesondere mit den Winkelblechen 17 und 18, verbunden und sorgt dafür, daß das Abstreifblech 16 und die darüber angeordnete Welle 12 immer eine solche Temperatur aufweisen, daß die von der Welle 12 aufgenommene und an dem Abstreifblech 16 herabfließende Masse nicht erstarrt, sondern nach unten in Schwerkraftrichtung ablaufen kann. Etwaige weitere Überzugsmasse, die an dem Winkelblech 18 nicht abgestreift wird, gelangt in den Bereich einer zweiten Abstreifkante, die von der oberen Kante des Winkelbleches 17 gebildet wird. Solche restliche Überzugsmasse 25 fließt an der Innenseite des Winkelbleches 13 im Bereich des Zwischenraumes 21 nach unten. Damit dies ungehindert geschehen kann, sind die Permanentmagnete 20 auf gegenseitigem Abstand (Figur 2) angeordnet. Sie besitzen eine etwa dreieckige Form und lassen zwischen sich Durchtrittsspalte 26 für die Überzugsmasse 25 frei. Auch durch die Stäbe der Heizeinrichtung 24 wird dieser Abfluß der übernommenen Masse nicht behindert. Die Masse von beiden Abstreifstellen gelangt auf ein Schrägblech 27 und fließt in den Massevorrat 28 der Überziehmaschine zurück, so daß die Masse im Kreislauf weitergeführt und wiederverwendet wird.

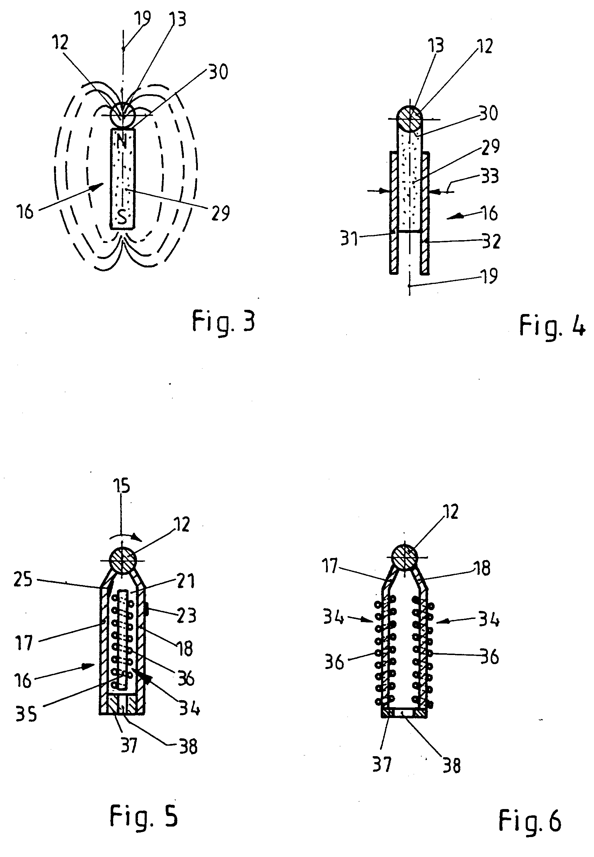

In den Figuren 3 bis 6 sind nur die wesentlichen Teile der Vorrichtung dargestellt, und zwar einmal die Welle 12 und zum anderen das Abstreifblech 16. Es werden verschiedene Ausführungsformen verdeutlicht.

Figur 3 zeigt eine Ausführungsform, bei der das Abstreifblech 16 aus einem mit magnetischen Partikeln gefüllten Stützstreifen 29 aus Kunststoffmaterial besteht. Der Stützstreifen 29 stellt praktisch einen Stabmagneten dar, wobei es gleichgültig ist, ob dessen Nordpol oder dessen Südpol nach oben gerichtet ist. Auf jeden Fall bildet die obere Breitfläche 30 den konzentrierten Austritt der Feldlinien des Stabmagnetes, so daß die Welle symmetrisch zu der Längsmittelebene 19 auch bei horizontal flach ausgebildeter Breitfläche 30 gehalten ist. Bei hinreichender Steifheit des Stützstreifens 29 kann dieser allein Verwendung finden. Es ist aber auch möglich, wie Figur 4 andeutet, den Stützstreifen 29 durch zwei Spannbleche 31 und 32 abzustützen und zu halten, die die mechanische Festigkeit über die Arbeitsbreite erbringen. Bei dieser Ausführungsform gemäß Figur 4 kann der Stützstreifen 29 aus verhältnismäßig weichem Kunststoffmaterial bestehen. Er benötigt lediglich eine gewisse Abriebfestigkeit beim Zusammenwirken mit der sich drehenden Welle 12. Die obere Breitfläche 30 muß jedoch nicht unbedingt eben, wie in Figur 3 dargestellt, sondern kann auch bettförmig gekrümmt, wie in Figur 4 verdeutlicht, ausgebildet sein. Damit wird die Abstreifwirkung der von der Welle 12 übernommenen Überzugsmasse am Abstreifblech 16 verbessert. Eine Spanneinrichtung 33, die zugleich eine Höhenjustierbarkeit für den Stützstreifen 29 beinhaltet, ist schematisch angedeutet. Es ist durchaus möglich und auch zulässig, die bettförmige Gestaltung der Breitfläche 30 von vornherein vorzusehen.

Andererseits kann aber auch das Einarbeiten der Welle 12 in die anfänglich eben ausgebildete Breitfläche 30 zugelassen werden. Um die Nachstellmöglichkeit zu geben, muß eine Höheneinstellvorrichtung bzw. die Spanneinrichtung 33 vorgesehen sein.

In den Figuren 5 und 6 sind Ausführungsbeispiele dargestellt, bei denen anstelle von Permanentmagneten Elektromagnete 34 Anwendung finden. Bei der Ausführungsform gemäß Figur 5 sind zunächst die beiden Winkelbleche 17 und 18 als Bestandteil des Abstreifbleches 16 vorgesehen. Die Welle 12 ist ähnlich aufgelagert, wie dies das Ausführungsbeispiel der Figur 1 zeigt. Im Zwischenraum 21 sind in Abständen über die Arbeitsbreite verteilt mehrere Elektromagnete 34 untergebracht, die jeweils einen Kern 35 und eine elektrisch versorgte Spule 36 aufweisen. Damit ist die Magnetkraft auf einfache Weise einstell- bzw. regelbar. Zum Schließen des Magnetfeldes im unteren Bereich der Winkelfläche 17 und 18 ist ein Joch 37 angeordnet. Das Joch 37 ist in Abständen mit Durchtrittsöffnungen 38 für im Zwischenraum 21 herabfließende Überzugsmasse 25 ausgestattet.

Bei der Ausführungsform gemäß Figur 6 wird auf einen gesonderten Kern 35 verzichtet. Die Wicklungen der Spule 36 bzw. der Spulen 36 sind durch Durchbrechungen in den Winkelstücken 17 und 18 hindurchgeführt, so daß Bereiche der Winkelstücke 17 und 18 zugleich den Kern der Elektromagnete 34 bilden. Auch hier werden die Feldlinien im unteren Bereich durch ein mit Durchtrittsöffnungen 38 versehenes Joch 37 konzentriert. Im oberen Bereich findet die Konzentration über das ferromagnetische Material der Welle 12 statt. Bei den Ausführungsformen der Figuren 5 und 6 kann die Abstimmung so getroffen sein, daß eine gesonderte Heizeinrichtung 24 in Fortfall kommt und die Elektromagnete 34 zugleich auch die Funktion der Heizeinrichtung 24 übernehmen.

### BEZUGSZEICHENLISTE

- 1: Förderband
- 2: Walze
- 3: Pfeil
- 4: Förderband
- 5: Walze
- 6: Pfeil
- 7: Spaltbereich
- 8: Warenstück
- 9: hinterer Bodenbereich
- 10: Grat
- 11: Überzugsmasse
- 12: Welle
- 13: Achse
- 14: Motor
- 15: Pfeil
- 16: Abstreifblech
- 17: Winkelblech
- 18: Winkelblech
- 19: Längsmittelebene
- 20: Permanentmagnet
- 21: Zwischenraum
- 22: Förderebene
- 23: Tropfen
- 24: Heizeinrichtung
- 25: Überzugsmasse
- 26: Durchtrittsspalt
- 27: Schrägblech
- 28: Massevorrat
- 29: Stützstreifen
- 30: Breitfläche
- 31: Spannblech
- 32: Spannblech
- 33: Spanneinrichtung
- 34: Elektromagnet
- 35: Kern
- 36: Spule
- 37: Joch
- 38: Durchtrittsöffnung

## Patentansprüche

1. Vorrichtung zum Entfernen von schmelzflüssiger Überzugsmasse, insbesondere Schokolademasse, im hinteren Bodenbereich (9) von Warenstücken (8), mit einer im Spaltbereich (7) zwischen zwei aneinander anschließenden Förderbändern (1, 4) über die Arbeitsbreite reichenden, angetriebenen Welle (12), **dadurch gekennzeichnet**, daß unter der Welle (12) ein ortsfest und etwa vertikal angeordnetes, beheiztes Abstreifblech (16) vorgesehen ist, auf dem die Welle (12) abgestützt ist und welches die Welle von der übernommenen Überzugsmasse (11) reinigt, und daß die Welle (12) auf dem Abstreifblech (16) durch magnetische Kräfte gehalten und gelagert ist.

2. Vorrichtung nach Anspruch 1, **dadurch gekennzeichnet**, daß im Bereich des Abstreifbleches (16) Magnete (20, 34) vorgesehen und über die Arbeitsbreite verteilt angeordnet sind.

3. Vorrichtung nach Anspruch 1, **dadurch gekennzeichnet**, daß das Abstreifblech (16) selbst ganz oder teilweise magnetisch ausgebildet ist.

4. Vorrichtung nach Anspruch 3, **dadurch gekennzeichnet**, daß das Abstreifblech (16) oder der der Welle (12) zugekehrte Teil etwa rechteckigen Querschnitt aufweist, auf dessen oberer, sich etwa horizontal erstreckender Breitfläche (30) die Welle (12) mittig gehalten ist.

5. Vorrichtung nach Anspruch 4, **dadurch gekennzeichnet**, daß die Breitfläche (30) des Abstreifblechs (16) bettartig ausgebildet ist.

6. Vorrichtung nach Anspruch 3 oder 4, **dadurch gekennzeichnet**, daß das Abstreifblech (16) zwei Spannbleche (31, 32) aufweist, zwischen denen ein mit magnetischen Partikel gefüllter Stützstreifen (29) aus Kunststoff angeordnet und gehalten ist, auf dessen oberer Breitfläche (30) die Welle abgestützt ist.

7. Vorrichtung nach den Ansprüchen 1 und 2, dadurch gekennzeichnet, daß das Abstreifblech (16) zwei etwa symmetrisch zu einer vertikalen Längsmittelebene (19) über die Arbeitsbreite ausgebildete Winkelbleche (17, 18) aufweist, die mit geringem gegenseitigem Abstand angeordnet sind, und daß im Zwischenraum (21) zwischen den Winkelblechen (17, 18) die Magnete (20, 34) vorgesehen sind.

8. Vorrichtung nach Anspruch 7, dadurch gekennzeichnet, daß die Magnete (20, 34) mit gegenseitigem Abstand angeordnet sind und eine den Abfluß von Überzugsmasse (25) gestattenden Form aufweisen.

9. Vorrichtung nach einem oder mehreren der Ansprüche 1 bis 8, dadurch gekennzeichnet, daß die Magnete als Permanentmagnete (20) ausgebildet sind.

10. Vorrichtung nach einem oder mehreren der Ansprüche 1 bis 8, dadurch gekennzeichnet, daß die Magnete als Elektromagnete (34) ausgebildet sind.

## Claims

1. Apparatus to remove the liquid coating, especially chocolate-coating, deposited on the back bottom (9) of articles (8), having a driven shaft (12) arranged in the gap (7) between two cooperating belts (1, 4) and extending over the working width, **wherein** a stripper (16) is provided below the shaft (12), the stripper (16) being fixly positioned, about vertically arranged, supports the shaft (12), and cleans the shaft (12) from the taken liquid coating (11), and the shaft (12) is borne and held on the stripper (16) under the influence of magnetic forces.

2. The apparatus of claim 1, **wherein** magnets (20, 34) are provided in the area of the stripper (16) and arranged over the working width.

3. The apparatus of claim 1, **wherein** the entire stripper (16) or parts of the stripper (16) are made from magnetic material.

4. The apparatus of claim 3, **wherein** the stripper (16) or the part of the stripper directed towards the shaft (12) comprises an about rectangular cross section, and the shaft (12) is supported and held on the middle of the upper surface (30) extending substantially horizontally.

5. The apparatus of claim 4, **wherein** the upper surface (30) of the stripper (16) has a bed-like shape.

6. The apparatus of claim 3 or 4, **wherein** the stripper (16) comprises two supporting sheets (31, 32) and a supporting strip (29) of plastic filled with magnetic particles is arranged and held between the supporting sheets (31, 32), whereby the shaft (12) is borne on the upper surface (30) of the supporting strip.

7. The apparatus of claims 1 and 2, **wherein** the stripper (16) comprises two angular sheets (17, 18) arranged about symmetrically with respect to the vertical center plane (19), extending over the working width, and located with small distance to each other, and the magnets (20, 34) are provided in the space (21) between the angular sheets (17, 18).

8. The apparatus of claim 7, **wherein** the magnets (20, 34) are arranged with distance to each other and have a shape permitting the flow of the liquid coating (25).

9. The apparatus of one or more of claims 1 to 8, **wherein** the magnets are provided in form of permanent magnets (20).

10. The apparatus of one or more of claims 1 to 8, **wherein** the magnets are provided in form of electromagnets (34).

## Revendications

1. Dispositif destiné a éliminer une pâte de couverture en fusion, en particulier une pâte de chocolat, dans la zone de fond (9) arrière de produits (8), comportant un arbre (12) entraîné, s'étendant dans la zone d'interstice (7) entre deux bandes de transport (1, 4) se raccordant l'une a l'vautre, sur la largeur de travail, caractérisé en ce que sous l'arbre (12) est prévue une tôle de raclage (16) chauffée, fixe et à peu près verticale, sur laquelle l'arbre (12) prend appui et qui nettoie l'arbre de la pâte de couverture (11) reprise, et en ce que l'arbre (12) est maintenu et supporté sur la tôle de raclage (16) par des forces magnétiques.

2. Dispositif selon la revendication 1, caractérisé en ce que dans la zone de la tôle de raclage (16) sont prévus des aimants (20, 34) qui sont répartis sur la largeur de travail.

3. Dispositif selon la revendication 1, caractérisé en ce que la tôle de raclage (16) est elle-même entièrement ou partiellement magnétique.

4. Dispositif selon la revendication 3, caractérisé en ce que la tôle de raclage (16) ou la partie tournée vers l'arbre (12) présente une section à peu près rectangulaire, l'arbre (12) étant maintenu au centre sur sa surface de côté large (30) supérieure, s'étendant à peu près horizontalement.

5. Dispositif selon la revendication 4, caractérisé en ce que ladite surface de côté large (30) de la tôle de raclage (16) est du type d'un siège.

6. Dispositif selon la revendication 3 ou 4, caractérisé en ce que la tôle de raclage (16) comporte deux tôles de serrage (31, 32), entre lesquelles est placée et maintenue une bande d'appui (29) en matière plastique, remplie de particules magnétiques, sur la surface de côté large (30) supérieure de laquelle est soutenu l'arbre.

7. Dispositif selon les revendications 1 et 2, caractérisé en ce que la tôle de raclage (16) comporte deux tôles angulaires (17, 18) formées à peu près symétriquement par rapport à un plan médian longitudinal (19) vertical, sur la largeur de travail, lesquelles sont disposées avec un faible écartement, et en ce que dans l'espace intermédiaire (21) entre les tôles angulaires (17, 18, sont prévus les aimants (20, 34).

8. Dispositif selon la revendication 7, caractérisé en ce que les aimants (20, 34) sont écartés l'un de l'autre et présentent une forme autorisant l'écoulement de la pâte de couverture (25).

9. Dispositif selon une ou plusieurs des revendications 1 à 8, caractérisé en ce que les aimants sont des aimants permanents (20).

10. Dispositif selon une ou plusieurs des revendications 1 à 8, caractérisé en ce que les aimants sont des électro-aimants (34).
